# FASCICULE DE BREVET EUROPEEN

(11) **EP 1 876 466 B1**
(45) Date de publication et mention de la délivrance du brevet: **29.02.2012**
(21) Numéro de dépôt: 07111674.3
(22) Date de dépôt: 03.07.2007
(51) Int. Cl.: G01S 19/08

(54) **Dispositif de génération de messages, d'intégrité signalant des stations de surveillance nominales, dégradées ou inactives de systèmes de navigation par satellites**
Vorrichtung zur Erstellung von Integritätsnachrichten, die nominelle, beschädigte oder inaktive Überwachungsstationen von Satellitennavigationssystemen melden
Device for the generation of integrity messages signalling nominal, degraded or inactive surveillance stations for satellite navigation systems

(30) Priorité: 05.07.2006 FR 0652804
(43) Date de publication de la demande: 09.01.2008
(73) Titulaire: Alcatel Lucent, 75007 Paris (FR)
(72) Inventeur: Damidaux, Jean-Louis, 31650 Auzielle (FR); Van-den-Bossche, Mathias, 31120 Goyrans (FR); Levy, Jean Christophe, 31130 Balma (FR)
(74) Mandataire: Nicolle, Olivier

(56) Documents cités:
- WO-A-95/18977
- OEHLER V ET AL: "The Galileo Integrity Concept" ION GNSS. INTERNATIONAL TECHNICAL MEETING OF THE SATELLITE DIVISION OF THE INSTITUTE OF NAVIGATION, WASHINGTON, DC, US, 21 septembre 2004 (2004-09-21), pages 604-615, XP002375520
- FRANKO, R. E. ET AL: "A New Generation of DGPS Broadcasting Stations" PROCEEDINGS OF ION GPS-98, 15 septembre 1998 (1998-09-15), pages 1271-1283, XP002416561 Nashville,TN,USA
- HOUGHTON R L ET AL: "Simulation of GPS augmentation systems", OCEANS '98 CONFERENCE PROCEEDINGS NICE, FRANCE 28 SEPT.-1 OCT. 1998, NEW YORK, NY, USA,IEEE, US, vol. 2, 28 September 1998 (1998-09-28), pages 835-839, XP010311616, DOI: 10.1109/OCEANS.1998.724355 ISBN: 978-0-7803-5045-8

## Description

L'invention concerne les systèmes de navigation par satellites (de type RNSS (pour « Radio Navigation Satellite System ») ou GNSS (pour « Global Navigation Satellite System »)), et plus précisément la génération des messages d'intégrité qui sont transmis aux récepteurs de navigation, en complément des messages de navigation.

On entend ici par « système de navigation par satellites » tout système dédié à la navigation et comportant une constellation de satellites placés en orbite autour d'un astre (par exemple la Terre), un ensemble de stations de surveillance de satellites (terrestres ou spatiales), et un centre de calcul. Il pourra s'agir, par exemple, de l'un des systèmes existants (GPS, EGNOS, WAAS) ou de l'un des futurs systèmes (GALILEO, COMPASS), ou encore de l'un de leurs équivalents ou dérivés.

Par ailleurs, on entend ici par « message de navigation » un message qui est diffusé vers des récepteurs de navigation d'usagers d'un système de navigation par satellites, et qui comporte des informations de navigation relatives à sa position orbitale et/ou sa synchronisation (décalage de son horloge interne par rapport à l'horloge de référence du système).

De plus, on entend ci-après par « informations d'intégrité » des données représentatives des valeurs de fiabilité d'informations sur la position et/ou les décalages des horloges des satellites, utilisées pour produire des informations de positions et/ou d'horloges de l'usager, et contenues dans un message de navigation.

Comme le sait l'homme de l'art, la qualité de la surveillance de l'intégrité des usagers des récepteurs de navigation a une incidence sur la confiance qu'un usager peut avoir dans la position que son récepteur (de navigation) a déterminée. Cette qualité de surveillance dépend essentiellement des conditions de surveillance de l'intégrité, c'est-à-dire de la combinaison du nombre de stations de surveillance actives (c'est-à-dire nominales ou dégradées) et donc capables de surveiller chaque satellite, des erreurs de mesures de pseudo-distances effectuées par ces stations de surveillance, de la distribution géométrique (positions) des stations de surveillance vis-à-vis du (des) satellite(s) et des algorithmes utilisés pour effectuer cette surveillance. Une panne d'au moins une station de surveillance ou un problème de transmission va donc dégrader les performances de surveillance de l'intégrité, et il est crucial d'en informer les usagers aussi vite que possible.

Dans les systèmes de navigation actuels (avec intégrité), un indicateur de qualité de la surveillance d'intégrité (ou lQSl) est diffusé dans un message d'intégrité à destination des récepteurs de navigation pour chaque satellite surveillé par le « segment » de surveillance d'intégrité du système. Par exemple, dans le cas du système EGNOS ou WAAS l'IQSI est appelé UDRE (pour « User Differential Range Error »), et dans le cas du système GALILEO l'IQSI est appelé SISMA (pour « Signal In Space Monitoring Accuracy »).

Un récepteur de navigation ayant intérêt à utiliser autant de satellites que possible pour améliorer l'estimation de sa position, il est donc important qu'il dispose du plus grand nombre d'IQSI possible. Or, non seulement le nombre de constellations de satellites de navigation augmente, mais encore le nombre de satellites par constellation a tendance à augmenter (la constellation GPS standard est définie pour 24 satellites mais comprend en fait 27 ou 28 satellites, et Galileo pourra contenir jusqu'à 36 satellites). Par conséquent, les messages d'intégrité classiques vont avoir tendance à comprendre un nombre de plus en plus élevé d'IQSI. Cette tendance risque encore de s'aggraver si un même « réseau » de stations de surveillance est utilisé pour plusieurs constellations de satellites de navigation différentes (par exemple un segment de surveillance d'intégrité commun aux trois constellations GPS, GLONASS et GALILEO devrait gérer plus de 90 satellites).

En cas de panne d'une partie du segment de surveillance d'intégrité, il faut informer les usagers des modifications de capacité de surveillance de l'intégrité de plusieurs dizaines de satellites, en envoyant autant d'IQSI que de satellites concernés. Cela pose un réel problème du fait de la limitation de la bande passante dédiée aux signaux de navigation (par exemple l'ensemble des messages de type SBAS (pour « Satellite Based Augmentation System » - système de navigation par satellite dit « augmenté ») ne permet de gérer que 51 satellites d'une façon statique, l'ensemble des messages prévus pour le système GALILEO ne permet de gérer que 36 satellites d'une façon statique, et une gestion dynamique nécessitant une identification de chaque satellite (7 bits pour 90 satellites) offre encore moins de capacité). Le mécanisme d'alerte des usagers par le biais de messages d'intégrité classiques s'avère donc mal adopté, voire inadapté, aux situations dans lesquelles le nombre de satellites surveillés par le segment de surveillance d'integrité est élevé, typiquement supérieur à cinquante.

L'article "The Galileo Integrity Concept" ION GNSS de Oether et al, 21 septembre 2004, décrit un dispositif de génération de messages d'intégrité au sein du système Galileo.

L'invention à donc pour but d'améliorer la situation,

Elle propose à cet effet un dispositif de génération de messages d'intégrité, rotatifs à au moins un système de navigation par satellites comportant un ensemble de stations de surveillance de satellites, et destinés à des récepteurs de navigation, comprenant des moyens de traitement chargés de déterminer à des instants choisis les stations (de surveillance de satellites) qui sont actives (i.e. nominales ou dégradées) pour chaque système concerné et de générer, consécutivement a chaque détermination, un message d'intégrité comportant au moins des données primaires représentatives des stations actives (i.e. nominales ou dégradées). En outre, les moyens de traitement sont chargés, chaque fois qu'ils détectent qu'au moins une station est devenue inactive ou est passée d'un état nominal à un état dégradé entre deux instants choisis successifs, de générer un message d'alerte d'intégrité comportant au moins des données primaires représentatives de chaque station (de surveillance de satellites) devenue inactive ou dégradée. Ainsi, chaque récepteur (de navigation) peut déterminer des informations d'intégrité relatives aux messages de navigation qu'il a reçus du système de navigation par satellites auquel il est adapté, compte tenu des stations du système qui sont effectivement actives (i.e. nominales ou dégradées) et de règle(s) de dégradation d'intégrité correspondantes.

Le mode de fonctionnement ainsi défini pourra être associé au mode de fonctionnement classique en fonction de l'avantage obtenu en termes d'utilisation de la bande passante.

On notera que les messages d'intégrité et les messages d'alerte d'intégrité selon l'invention sont différents de ceux qui sont habituellement utilisés et qui contiennent des données d'intégrité (ou IQSI) représentatives des valeurs de fiabilité des corrections d'erreur de positionnement orbital et/ou de synchronisation des satellites. Par conséquent, l'invention ne concerne que les récepteurs de navigation qui sont capables de déterminer eux-mêmes les données d'intégrité (IQSI) qui sont représentatives des valeurs de fiabilité des informations de position et/ou de décalage d'horloge des satellites qui sont utilisées pour produire les informations de position et/ou d'horloge usager qu'ils reçoivent. Les récepteurs de navigation concernés par l'invention doivent donc comporter un outil de calcul de données d'intégrité, comme par exemple un IQSI.

Le dispositif selon l'invention peut comporter d'autres caractéristiques qui peuvent être prises séparément ou en combinaison, et notamment :
- les données primaires peuvent, par exemple, être représentatives des coordonnées de position des stations, ou d'identifiants des stations (dont les coordonnées de position respectives sont connues des récepteurs de navigation) ainsi qu'éventuellement de correction(s) de coordonnées de position des stations ;
- ses moyens de traitement peuvent être chargés d'intégrer dans un message d'alerte d'intégrité des données secondaires représentatives d'une dégradation de qualité de mesure dans une station devenue dégradée ou inactive ;
- ses moyens de traitement peuvent être chargés d'intégrer dans un message d'intégrité des données secondaires représentatives de niveaux de qualité des informations fournies par les stations de surveillance actives (i.e. nominales ou dégradées) ou des algorithmes chargés de corriger ces informations dans le segment de mission ;
- les données secondaires peuvent, par exemple, être des identifiants d'abaques (ou de graphes) de qualité des informations fournies par les stations de surveillance actives (i.e. nominales ou dégradées) et/ou des identifiants d'algorithmes utilisés par le segment de mission pour corriger ces informations ;
- ses moyens de traitement peuvent être chargés d'intégrer dans un message d'intégrité des données secondaires représentatives d'informations de surveillance et/ou de précision déterminées pour chaque satellite à partir de données fournies par les stations actives (i.e. nominales ou dégradées) ;
- ses moyens de traitement peuvent être chargés d'intégrer dans un message d'alerte d'intégrité des données secondaires représentatives de règle(s) de dégradation d'intégrité devant être utilisée(s) pour chaque station de surveillance de satellites devenue inactive ou dégradée. Par exemple, les données secondaires sont des identifiants de règle(s) de dégradation d'intégrité qui doi(ven)t être utilisée(s) pour une station donnée devenue dégradée ;
- ses moyens de traitement peuvent être chargés de générer des messages d'intégrité périodiquement. Dans ce cas, l'écart temporel entre deux instants choisis est égal à la période de génération des messages d'intégrité.

L'invention est particulièrement bien adaptée, bien que de façon non exclusive, aux services d'intégrité de systèmes de navigation par satellites comme par exemple GALILEO, GPS, EGNOS, WAAS et COMPASS, ainsi que leurs variantes et leurs équivalents.

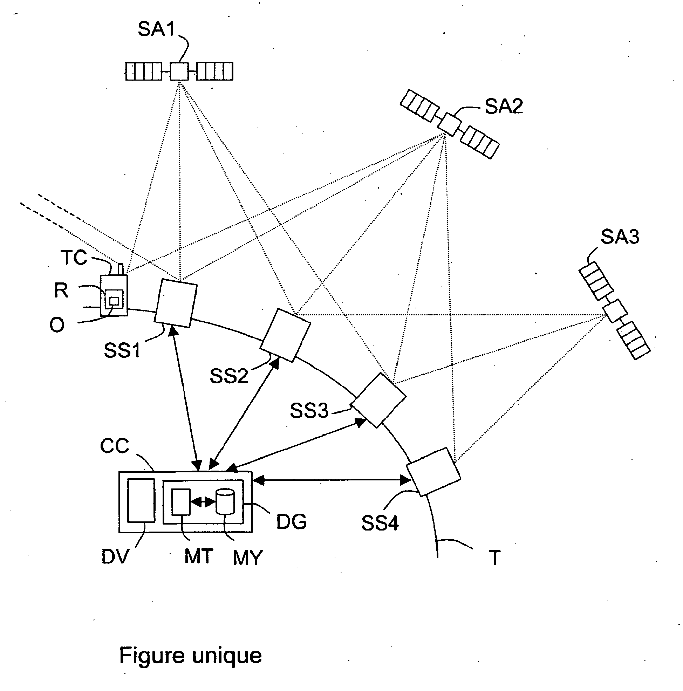

D'autres caractéristiques et avantages de l'invention apparaîtront à l'examen de la description détaillée ci-après, et du dessin annexé, sur lequel l'unique figure illustre de façon très schématique et fonctionnelle une partie d'un système de navigation par satellites comprenant une station de calcul équipée d'un exemple de réalisation d'un dispositif de génération de messages d'intégrité selon l'invention.

Le dessin annexé pourra non seulement servir à compléter l'invention, mais aussi contribuer à sa définition, le cas échéant.

L'invention a pour objet de permettre d'avertir des récepteurs de navigation des capacités de surveillance d'intégrité du segment (sol ou satellitaire) de surveillance d'intégrité d'au moins un système de navigation par satellites, afin qu'ils puissent eux-mêmes déterminer des données d'intégrité représentatives des valeurs de fiabilité des corrections d'erreur de positionnement orbital et/ou de synchronisation des satellites, utilisées pour produire des informations de navigation contenues dans les messages de navigation diffusés par lesdits satellites.

Dans ce qui suit, on considère à titre d'exemple non limitatif le cas d'un unique système de navigation par satellites. Mais, l'invention n'est pas limitée à un unique système de navigation par satellites. Plus précisément, elle concerne la surveillance d'intégrité (sol ou satellitaire) d'au moins une constellation de satellites de navigation d'au moins un système de navigation par satellites, et par exemple deux ou trois, voire même plus.

Par ailleurs, on considère que le système de navigation par satellites est le futur système GALILEO. Mais, l'invention n'est pas limitée à ce système. Elle concerne en effet tous les systèmes de navigation par satellites mettant en oeuvre une surveillance (sol ou satellitaire) de l'intégrité (ou vérification de cohérence), personnelle ou partagée, et notamment les systèmes existants de type GPS (en particulier GPS III), EGNOS et WAAS, et le futur système COMPASS, ainsi que tous leurs équivalents et dérivés.

Un système de navigation par satellites, comme par exemple celui qui est partiellement illustré sur l'unique figure, comprend au moins une constellation de satellites SAi (ici i = 1 à 3, mais dans la réalité sa valeur maximale est beaucoup plus grande, typiquement 36 dans le cas du système GALILEO), un ensemble de stations de surveillance (terrestres ou spatiales) SSj (ici j = 1 à 4, mais dans la réalité sa valeur maximale est beaucoup plus grande, typiquement de 40 à 100 dans le cas du système GALlLEO), et un centre de calcul SC.

Schématiquement, les satellites SAi sont placés en orbite autour de la Terre T et sont chargés, notamment, d'émettre des signaux permettant de faire des mesures de pseudo-distances et de diffuser en direction de la Terre T des messages de navigation qui leurs sont transmis par le segment sol de mission, afin que les informations qu'ils contiennent soient exploitées par des récepteurs de navigation R, éventuellement implantés dans des terminaux de communication TC (comme illustré), et par les stations de surveillance SSj.

On notera qu'un récepteur (de navigation) R peut constituer lui-même un équipement de communication. Par ailleurs, un récepteur (de navigation) R peut être implanté dans tout type de terminal (ou équipement) de communication TC, et notamment dans un téléphone mobile (ou cellulaire), un ordinateur portable ou embarqué, ou un assistant personnel numérique (ou PDA).

On notera également que l'invention ne concerne que les récepteurs (de navigation) R qui comportent un outil de calcul de données d'intégrité, comme par exemple un lQSl.

Les stations de surveillance SSj sont situées en des endroits choisis de la Terre T (comme illustré) ou dans des engins spatiaux, comme par exemple des satellites. Elles sont notamment chargées, d'une part, de collecter les messages de navigation qui sont diffusés par les satellites SAi de la constellation, et d'autre part, d'effectuer périodiquement des mesures des pseudo-distances qui les séparent des satellites SAi en vue. Chaque mesure de pseudo-distance et le message de navigation correspondant ainsi que son instant de réception sont communiqués par chaque station de surveillance SSj au centre de calcul SC.

Le centre de calcul SC est généralement - mais pas nécessairement - implanté sur la Terre T. Il comprend un dispositif de vérification de cohérence DV chargé, notamment, de contrôler la cohérence entre les mesures de pseudo-distance reçues et les informations contenues dans les messages de navigation diffusés par les satellites SAi, qui lui sont communiqués par les stations de surveillance SSj. Le centre de calcul SC peut également être chargé de prédire les trajectoires et décalages d'horloge des satellites SAi à partir des mesures de pseudo-distance effectuées par les stations (de surveillance) SSj. Ces prédictions de trajectoires et de décalages d'horloge servent à générer les futurs messages de navigation qui sont transmis aux satellites SAi afin qu'ils les diffusent.

L'invention propose d'adjoindre un dispositif de génération de messages d'intégrité DG au segment de surveillance d'intégrité (qui comprend les stations SSj et le dispositif de vérification de cohérence DV. Comme cela est illustré sur l'unique figure, ce dispositif de génération de messages d'intégrité DG peut faire partie du centre de calcul CC. Mais, cela n'est pas obligatoire, l'important étant qu'il puisse communiquer avec le dispositif de vérification de cohérence DV.

Le dispositif de génération de messages d'intégrité DG est chargé de générer, à destination des récepteurs R, des messages d'intégrité d'un nouveau type, relatifs à la constellation de satellites SAi du système de navigation par satellites. Il comprend à cet effet un module de traitement MT qui est tout d'abord chargé de déterminer à des instants choisis les stations (de surveillance de satellites) SSj qui sont actives (i.e. nominales ou dégradées) pour chaque système concerné.

On entend ici par « station active » une station SSj capable de surveiller les satellites SAi en vue et donc de transmettre au centre de calcul CC des mesures de pseudo-distance (nominales ou dégradées) et les messages de navigation correspondants. Une station active est ici appelée soit station nominale lorsqu'elle transmet des mesures de pseudo-distance nominales, soit station dégradée lorsqu'elle transmet des mesures de pseudo-distance dégradées (et donc différentes des nominales). Par conséquent, on entend ici par « station inactive » une station SSj incapable de surveiller les satellites SAi en vue et/ou de transmettre au centre de calcul CC des mesures de pseudo-distance et les messages de navigation correspondants soit du fait de conditions environnementales empêchant la collecte d'informations, soit du fait d'une panne interne, soit en raison d'un problème de transmission sur le trajet qui la sépare du centre de calcul CC.

Par exemple, cette détermination se fait de façon périodique, selon une période choisie de une (1) seconde. La période choisie définit l'écart temporel entre deux instants choisis successifs, qui dépend lui-même des contraintes de réactivité imposées au système de surveillance pour la détection de problèmes au niveau satellite.

L'ensemble des stations SSj actives (i.e. nominales ou dégradées) à un instant donné constitue la configuration du « réseau » de surveillance d'intégrité, lequel est constitué (ici au sol, mais pas obligatoirement) par toutes les stations SSj actives et inactives.

Consécutivement à chaque détermination de l'ensemble des stations SSj actives (i.e. nominales ou dégradées), le module de traitement MT du dispositif de génération de messages d'intégrité DG génère un message d'intégrité qui comporte au moins des données primaires représentatives des stations SSj actives (i.e. nominales ou dégradées) de cet ensemble.

La représentation des stations SSj actives (i.e. nominales ou dégradées) peut se faire sous toute forme. Ainsi, les données primaires peuvent, par exemple, être représentatives des identifiants des stations SSj. Ce cas est bien adapté aux situations dans lesquelles les stations SSj sont implantées en des endroits fixes sur la Terre T. En effet, les coordonnées de position des stations, nécessaires aux récepteurs R pour procéder à la détermination des données d'intégrité au moyen de leur outil de calcul O, n'évoluent que très peu dans le temps si bien qu'elles peuvent être connues à l'avance par les récepteurs R. Dans ce cas, lorsqu'un récepteur R reçoit un message d'intégrité contenant un identifiant de station SSj il cherche dans une table les coordonnées de position qui lui correspondent.

Dans une première variante, les données primaires peuvent être représentatives des coordonnées de position des stations SSj, notamment lorsque ces dernières ne sont pas connues des récepteurs R.

Dans une seconde variante, les données primaires peuvent être représentatives d'un identifiant de station SSj et d'une ou plusieurs corrections de coordonnées de position de cette station SSj. Ce cas nécessite également que les récepteurs R comprennent une table dans laquelle sont stockés les identifiants de station en correspondance de leurs coordonnées de position « habituelles » (c'est-à-dire connues à l'avance). Dans ce cas, lorsqu'un récepteur R reçoit un message d'intégrité contenant un identifiant de station SSj et une correction de coordonnées de position associée, il cherche dans une table les coordonnées de position qui lui correspondent et corrige ces dernières en fonction de la correction reçue, avant de les utiliser avec son outil de calcul O.

Par exemple, le dispositif D comporte des moyens de mémorisation MY, tels qu'une mémoire ou une base de données, dans lesquels il stocke chaque table de correspondance, ainsi qu'éventuellement la configuration en cours du réseau de surveillance d'intégrité.

On notera que le module de traitement MT du dispositif de génération de messages d'intégrité DG peut intégrer dans certains au moins des messages d'intégrité d'autres données, utiles à l'outil de calcul O d'un récepteur R pour déterminer les données d'intégrité.

Par exemple, il peut intégrer dans un (voire chaque) message d'intégrité des données secondaires représentatives des niveaux de qualité des informations fournies par les stations de surveillance. Il peut s'agir par exemple de niveau de précision des mesures qui sont entachées d'erreurs du fait de l'environnement de la station et/ou de l'instrument de mesure et/ou des algorithmes utilisés pour préparer ces données à l'intérieur du dispositif de vérification de cohérence DV, ou de toute autre manière permettant de caractériser la qualité des mesures.

En variante, les données secondaires peuvent être représentatives d'identifiants des abaques (ou graphes) d'erreur de mesure mentionnées ci-avant. Dans ce cas les graphes ou abaques doivent être connu(e)s à l'avance par les récepteurs R. Ainsi, lorsqu'un récepteur R reçoit un message d'intégrité contenant un identifiant de graphe(s) ou d'abaque(s), il cherche dans une table le(s) graphe(s) ou abaque(s) qui lui correspond(ent). Le récepteur récepteur R déduit du niveau de qualité des mesures représenté par l'abaque identifiée la contribution de chaque station à l'IQSI de chaque satellite.

Dans une autre variante ou bien en complément, le module de traitement MT peut intégrer dans un message d'intégrité des données secondaires représentatives d'informations de surveillance (par exemple un « flag » d'intégrité) et/ou d'informations de précision (par exemple une abaque d'erreur de mesure) déterminées pour chaque satellite par le centre de calcul CC à partir de données fournies par les stations actives (i.e. nominales ou dégradées) SSj et donc compte tenu de la configuration (active) du réseau de surveillance d'intégrité.

Chaque message d'intégrité est diffusé vers les récepteurs SSj afin qu'ils déterminent chacun de leur côté, au moyen de leur outil de calcul CC, des informations d'intégrité relatives aux messages de navigation qu'il a reçus du système de navigation par satellites auquel il est adapté, compte tenu des stations SSj actives (i.e. nominales ou dégradées), désignées dans le message d'intégrité et qui définissent la configuration (active) du réseau de surveillance d'intégrité.

Les messages d'intégrité peuvent être diffusés par tout moyen connu de l'homme de l'art, et notamment via les satellites SAi de la constellation, (comme par exemple dans le cas d'un système de type GALILEO - mode dit « Meo broadcast » - diffusion en orbite moyenne) ou par un ou plusieurs satellites géostationnaires (mode dit « Geo broadcast » - diffusion géostationnaire, par exemple dans le cas de la couche d'intégrité ajoutée à un système de type GPS ou GLONASS via des augmentations regionales satellitaires telles qu'EGNOS ou WAAS), ou encore par des réseaux de télécommunication terrestre comme dans les applications de type LBS (pour « Localisation Based Services » - services à base de localisation).

Les informations d'intégrité qui sont calculées par un outil de calcul O dépendent du système de navigation par satellites auquel son récepteur R est adapté. Il s'agit au moins d'un indicateur de qualité de la surveillance d'intégrité (ou IQSI) propre à chaque satellite. Par exemple, dans le cas du système EGNOS ou WAAS l'IQSI est l'UDRE (pour « User Differential Range Error »), et dans le cas du système GALILEO l'IQSI est le SISMA (pour « Signal In Space Monitoring Accuracy »). L'IQSI sert à traduire la qualité de surveillance des informations de navigation fournies par chaque satellite en niveau d'erreur potentielle sur la solution de position estimée par l'utilisateur.

Par ailleurs, chaque fois que le module de traitement MT détermine qu'entre deux instants choisis successifs au moins une station SSj vient de devenir dégradée ou inactive, il génère un message d'alerte d'intégrité qui comporte au moins des données primaires représentatives de chaque station SSj devenue dégradée ou inactive.

Ces données primaires sont du même type que celles qui sont intégrées dans un message d'intégrité (selon l'invention) présenté ci-avant. Il s'agit donc, par exemple, de données représentatives des coordonnées de position d'une station SSj devenue dégradée ou inactive, ou de l'identifiant d'une station SSj devenue dégradée ou inactive.

On notera que le module de traitement MT du dispositif de génération de messages d'intégrité DG peut intégrer d'autres données, utiles à l'outil de calcul O d'un récepteur R pour déterminer les données d'intégrité, dans certains au moins des messages d'alerte d'intégrité.

Par exemple, il peut intégrer dans un (voire chaque) message d'alerte d'intégrité des données secondaires représentatives de la dégradation de la qualité des informations (il peut s'agir par exemple de niveau de précision des mesures qui sont entachées d'erreurs du fait de l'environnement de la station et/ou de l'instrument de mesure et/ou des algorithmes utilisés pour préparer ces données à l'intérieur du dispositif de vérification de cohérence DV, ou de toute autre manière permettant de caractériser la qualité des mesures) dans une station SSj devenue dégradée ou inactive afin de mettre à jour les données utilisées par le récepteur pour calculer l'IQSI des satellites visibles de cette station SSj. Par exemple, ces données secondaires sont des identifiants d'abaque(s) (ou de graphe(s)) d'erreur de mesure à utiliser pour une station SSj devenue dégradée ou inactive. Ainsi, lorsqu'un récepteur R reçoit un message d'intégrité contenant un identifiant de graphe(s) ou d'abaque(s), il cherche dans une table le(s) graphe(s) ou abaque(s) qui lui correspond(ent).

Dans une variante ou en complément, des données secondaires peuvent être représentatives de règle(s) de dégradation d'intégrité devant être utilisée(s) par un outil de calcul O pour tenir compte d'une station SSj devenue dégradée ou inactive. Les définitions des règles peuvent être transmises dans les messages d'alerte d'intégrité. Mais, cela peut s'avérer coûteux en terme de nombre de bits. Par conséquent, il est préférable que les données secondaires soient des identifiants des règles de dégradation d'intégrité à utiliser. Mais, cela impose que les récepteurs R disposent d'une table dans laquelle sont stockés les identifiants des règles en correspondance de leurs définitions. Dans ce cas, lorsqu'un récepteur R reçoit un message d'alerte d'intégrité contenant un identifiant de règle(s), il cherche dans une table la ou les règles qui lui correspond(ent), puis il communique chaque définition de règle à son outil de calcul O afin qu'il l'utilise.

Par exemple, une règle de dégradation d'intégrité peut être du type « utilise la station » ou « n'utilise pas la station » ou encore « dégrade la qualité des mesures de cette station d'un coefficient X ».

On notera que le récepteur R peut être agencé pour déterminer lui-même la ou les règles à appliquer lorsqu'une station SSj est devenue dégradée ou inactive. Dans ce cas, il n'a besoin de recevoir que des premières données représentatives de la station SSj devenue dégradée ou inactive afin de lui appliquer (ou d'utiliser) la ou les règles correspondantes.

Ces règles de dégradation d'intégrité sont nécessaires à l'outil de calcul O de chaque récepteur R pour déterminer les informations d'intégrité, relatives aux messages de navigation reçus du système de navigation par satellites, compte tenu des stations SSj effectivement actives (i.e. nominales ou dégradées). L'algorithme à implémenter dans l'outil de calcul O doit être cohérent avec, sinon dérivé de, la méthode de vérification de l'intégrité effectuée par le dispositif de vérification de cohérence DV.

Le dispositif de génération de messages d'intégrité DG selon l'invention, et notamment son module de traitement MT et ses éventuels moyens de mémorisation MY, peuvent être réalisés sous la forme de circuits électroniques, de modules logiciels (ou informatiques), ou d'une combinaison de circuits et de logiciels.

L'invention offre un certain nombre d'avantages, parmi lesquels:
- elle permet de ne transmettre aux récepteurs de navigation, par exemple périodiquement, que la configuration active (i.e. nominales ou dégradées) du réseau de surveillance d'intégrité, et non pas l'IQSI de chacune des stations. En outre, en cas de panne elle permet de ne signaler aux récepteurs de navigation que la ou les stations qui sont devenues dégradées ou inactives,
- elle permet de surveiller un grand nombre de satellites de navigation, typiquement plus de 90,
- elle permet de prendre en compte simultanément plusieurs niveaux de surveillance, et par exemple une surveillance mono-fréquence et une surveillance bi-fréquences,
- elle permet de diffuser simultanément des alertes relatives aux satellites (IQSI) et au segment de surveillance d'intégrité (données primaires et secondaires décrites ci-dessus) pour optimiser l'occupation ainsi générée de la bande passante.

L'invention ne se limite pas aux modes de réalisation de dispositif de génération de messages d'intégrité décrits ci-avant, seulement à titre d'exemple, mais elle englobe toutes les variantes que pourra envisager l'homme de l'art dans le cadre des revendications ci-après.

## Revendications

1. Dispositif (DG) de génération de messages d'intégrité, relatifs à au moins un système de navigation par satellites (SAi) comportant un ensemble de stations de surveillance de satellites (SSj), et destinés a des récepteurs de navigation (R), ledit dispositif (DG) comprenant des moyens de traitement (MT) agencés pour déterminer à des instants choisis les stations de surveillance de satellites (SSj) actives, c'est-à-dire nominales ou dégradées, pour chaque système et pour générer, consécutivement à chaque détermination, un message d'intégrité comportant au moins des données primaires représentative desdites stations de surveillance de satellites (SSj) actives, et **caractérisé en ce que** en cas de détection entre deux instants choisis successifs d'au moins une station de surveillance de satellites (SSj) devenue dégradée ou inactive, pour générer un message d'alerte d'intégrité comportant au moins des données primaires représentatives de chaque station de surveillance de satellites (SSj) devenue dégradée ou inactive, de sorte que chaque récepteur (R) puisse déterminer dés informations d'intégrité relatives à des messages de navigation transmis par un système de navigation par satellites auquel il est adapté, compte tenu des stations de surveillance de satellites (SSj) dudit système qui sont effectivement actives et de règle(s) de dégradation d'intégrité correspondantes.

2. Dispositif selon la revendication 1, **caractérisé en ce que** lesdites données primaires sont représentatives des coordonnées de position des stations de surveillante dé satellites (SSj).

3. Dispositif selon la revendication 1, **caractérisé en ce que** lesdites données primaires sont représentatives d'identifiants des stations de surveillance de stellites (SSj), dont les coordonnées de position respective sont connues desdits récepteurs de navigation (R).

4. Dispositif selon la revendication 3, **caractérisé en ce que** lesdites données primaires sont également représentatives de correction (s) de coordonnées de position des stations de surveillance de satellites (SSj),

5. Dispositif selon l'une des revendications 1 à 4, **caractérisé en ce que** lesdits moyens de traitement (MT) sont agencés pour intégrer dans un message d'alerte d'intégrité des données secondaires représentatives d'une dégradation de qualité de mesure dans une station de surveillance de satellites (SSj) devenue dégradée ou inactive.

6. Dispositif selon l'une des revendications 1 à 5, **caractérisé en ce que** lesdits moyens de traitement (MT) sont agencés pour intégrer dans un message d'intégrité des données secondaires représentatives de niveaux d'erreur de mesure desdites stations de surveillance de satellites (SSj) actives, c'est-à-dire nominales ou dégradées.

7. Dispositif selon l'une des revendications 5 et 6, **caractérisé en ce que** lesdites données secondaires sont des identifiants d'abaques de qualité des informations fournies par lesdites stations de surveillance (SSj) actives et/ou des identifiants d'algorithmes utilisés dans un segment de mission pour corriger lesdites informations fournies par lesdites stations de surveillance (SSj) actives.

8. Dispositif selon l'une des revendications 1 à 7, **caractérisé en ce que** lesdits moyens de traitement (MT) sont agencés pour intégrer dans un message d'intégrité des données secondaires représentatives d'informations de surveillance et/ou de précision déterminées pour chaque satellite à partir de données fournies par lesdites stations de surveillance de satellites (SSj) actives, c'est-à-dire nominales ou dégradées.

9. Dispositif selon l'une des revendications 1 à 8, **caractérisé en ce que** lesdits moyens de traitement (MT) sont agencés pour intégrer dans un message d'alerte d'intégrité des données secondaires représentatives de règle(s) de dégradation d'intégrité à utiliser pour chaque station de surveillance de satellites devenue dégradée ou inactive.

10. Dispositif selon la revendication 9, **caractérisé en ce que** lesdites' données secondaires sont des identifiants de règle(s) de dégradation d'intégrité à utiliser pour une station de surveillance de satellites devenue dégradée ou inactive, lesdites règles de dégradation d'intégrité étant connues desdits récepteurs de navigation (R).

11. Dispositif selon l'une des revendications 1 à 10, **caractérisé en ce que** lesdits moyens de traitement (MT) sont agencés pour générer des messages d'intégrité de façon périodique, l'écart temporel entre deux instants choisis étant alors égal à la période de génération de message d'intégrité.

12. Utilisation du dispositif de génération de messages d'intégrité (DG) selon l'une des revendications précédentes, pour les services d'intégrité de systèmes de navigation par satellites choisis dans un groupe comprenant au moins GALILEO, GPS, EGNOS, WAAS et COMPASS, ainsi que leurs variantes et leurs équivalents.

## Claims

1. A device for generating integrity messages (DG) related to at least one satellite navigation system (SAi) comprising a set of satellite monitoring stations (SSj), and intended for navigation receivers (R), said device (DG) comprising processing means (MT) operative to determine, at chosen moments, the active satellite monitoring stations (SSj), i.e. nominal or degraded ones, for each system and to generate, subsequent to each determination, an integrity message comprising at least primary data representative of said active satellite monitoring stations (SSj), and **characterized in that** in the event that at least one satellite monitoring station (SSj) that has become degraded or inactive is detected between two successive chosen moments, to generate an integrity alert message comprising at least primary data representative of each satellite monitoring station (SSj) that has become degraded or inactive, so that each receiver (R) can determine integrity information related to navigation messages transmitted by a satellite navigation system to which it is adapted, taking into account the satellite monitoring stations (SSj) of said system that are actually active and corresponding integrity degradation rule(s).

2. A device according to claim 1, **characterized in that** said primary data is representative of the satellite monitoring stations' (SSj) position coordinates.

3. A device according to claim 1, **characterized in that** said primary data is representative of identifiers of the satellite monitoring stations (SSj), whose respective position coordinates are known from said navigation receivers (R).

4. A device according to claim 3, **characterized in that** said primary data is also representative of position coordinate correction(s) of the satellite monitoring station (SSj).

5. A device according to one of the claims 1 to 4, **characterized in that** said processing means (MT) are operative to integrate into an integrity alert message secondary data representative of a measurement quality degradation in a satellite monitoring station (SSj) that has become degraded or inactive.

6. A device according to one of the claims 1 to 5, **characterized in that** said processing means (MT) are operative to integrate into an integrity alert message secondary data representative of measurement error levels of said active satellite monitoring stations (SSj), i.e. nominal or degraded ones.

7. A device according to one of the claims 5 and 6, **characterized in that** said secondary data are quality graph identifiers of information provided by said active satellite monitoring stations (SSj) and/or algorithm identifiers used in a mission segment to correct said information provided by said active monitoring stations (SSj).

8. A device according to one of the claims 1 to 7, **characterized in that** said processing means (MT) are operative to integrate into an integrity message secondary data representative of monitoring and/or accuracy information determined for each satellite based on data provided by said active satellite monitoring stations (SSj), i.e. nominal or degraded ones.

9. A device according to one of the claims 1 to 7, **characterized in that** said processing means (MT) are operative to integrate into an integrity alert message secondary data representative of integrity degradation rule(s) to be used for each satellite monitoring station that has become degraded or inactive.

10. A device according to claim 9, **characterized in that** said secondary data are identifiers of integrity degradation rules to be used for a satellite monitoring station that has become degraded or inactive, said integrity degradation rules being known from said navigation receivers (R).

11. A device according to one of the claims 1 to 10, **characterized in that** said processing means (MT) are operative to periodically generate integrity messages, the gap in time between two chosen moments being in this case equal to the integrity message generation period.

12. Use of the device for generating integrity messages (DG) according to one of the preceding claims, for satellite navigation system integrity services chosen from a group comprising at least GALILEO, GPS, EGNOS, WAAS, and COMPASS, as well as their variants and equivalents.

## Patentansprüche

1. Vorrichtung (DG) zur Erzeugung von für Navigationsempfänger (R) bestimmte Integritätsnachrichten in Bezug auf mindestens ein Satellitennavigationssystems (SAi), welches einen Satz von Satellitenüberwachungsstationen (SSj) umfasst, wobei die besagte Vorrichtung (DG) Verarbeitungsmittel (MT) umfasst, die dazu ausgelegt sind, zu ausgewählten Zeitpunkten für jedes System die aktiven, d.h. sich im nominalen oder eingeschränkten Betrieb befindlichen Satellitenüberwachungsstationen (SSj) zu ermitteln und im Anschluss an jede Ermittlung eine Integritätsnachricht mit zumindest primären Daten, die für die besagten aktiven Satellitenüberwachungsstationen (SSj) repräsentativ sind, zu erzeugen, und **dadurch gekennzeichnet, dass** im Fall des Erkennens, zwischen zwei ausgewählten aufeinanderfolgenden Zeitpunkten, mindestens einer Satellitenüberwachungsstation (SSj), deren Betrieb inaktiv oder eingeschränkt geworden ist, eine Integritätsalarmnachricht mit zumindest primären Daten, die für jede Satellitenüberwachungsstation (SSj), deren Betrieb inaktiv oder eingeschränkt geworden ist, repräsentativ sind, erzeugt wird, so dass jeder Empfänger (R) Integritätsinformationen in Bezug auf von einem Satellitennavigationssystem, für welches er ausgelegt ist, übertragene Navigationsnachrichten ermitteln kann, unter Berücksichtigung der Satellitenüberwachungsstationen (SSj) des besagten Systems, die tatsächlich aktiv sind, und der entsprechenden Integritätseinschränkungsregel(n).

2. Vorrichtung nach Anspruch 1, **dadurch gekennzeichnet, dass** die besagten primären Daten für die Positionskoordinaten der Satellitenüberwachungsstationen (SSj) repräsentativ sind.

3. Vorrichtung nach Anspruch 1, **dadurch gekennzeichnet, dass** die besagten primären Daten für Kennungen derjenigen Satellitenüberwachungsstationen (SSj), deren jeweiligen Positionskoordinaten den besagten Navigationsempfängern (R) bekannt sind, repräsentativ sind.

4. Vorrichtung nach Anspruch 3, **dadurch gekennzeichnet, dass** die besagten primären Daten ebenfalls für die Korrektur(en) von Positionskoordinaten der Satellitenüberwachungsstationen (SSj) repräsentativ sind.

5. Vorrichtung nach einem der Ansprüche 1 bis 4, **dadurch gekennzeichnet, dass** die besagten Verarbeitungsmittel (MT) für das Einfügen von sekundären Daten, welche für eine Verschlechterung der Messqualität in einer Satellitenüberwachungsstation (SSj), deren Betrieb inaktiv oder eingeschränkt geworden ist, repräsentativ sind, in eine Integritätsalarmnachricht ausgelegt sind.

6. Vorrichtung nach einem der Ansprüche 1 bis 5, **dadurch gekennzeichnet, dass** die besagten Verarbeitungsmittel (MT) für das Einfügen von sekundären Daten, welche für Messfehlerpegel der besagten aktiven, d.h. sich im nominalen oder eingeschränkten Betrieb befindlichen Satellitenüberwachungsstationen (SSj) repräsentativ sind, in eine Integritätsnachricht ausgelegt sind.

7. Vorrichtung nach einem der Ansprüche 5 und 6, **dadurch gekennzeichnet, dass** die besagten sekundären Daten Kennungen von Qualitätsdiagrammen der von den besagten aktiven Satellitenüberwachungsstationen (SSj) bereitgestellten Informationen und/oder Kennungen von Algorithmen, die in einem Einsatzsegment verwendet werden, um die besagten von den besagten aktiven Satellitenüberwachungsstationen (SSj) bereitgestellten Informationen zu korrigieren, sind.

8. Vorrichtung nach einem der Ansprüche 1 bis 7, **dadurch gekennzeichnet, dass** die besagten Verarbeitungsmittel (MT) für das Einfügen von sekundären Daten, welche für Überwachungs- und/oder Präzisionsinformationen, die ausgehend von von den besagten aktiven, d.h. sich im nominalen oder eingeschränkten Betrieb befindlichen Satellitenüberwachungsstationen (SSj) bereitgestellten Daten für jeden Satelliten ermittelt werden, repräsentativ sind, in eine Integritätsnachricht ausgelegt sind.

9. Vorrichtung nach einem der Ansprüche 1 bis 8, **dadurch gekennzeichnet, dass** die besagten Verarbeitungsmittel (MT) für das Einfügen von sekundären Daten, welche für für jede Satellitenüberwachungsstation, deren Betrieb inaktiv oder eingeschränkt geworden ist, zu verwendende Integritätseinschränkungsregel(n) repräsentativ sind, in eine Integritätsalarmnachricht ausgelegt sind.

10. Vorrichtung nach Anspruch 9, **dadurch gekennzeichnet, dass** die besagten sekundären Daten Kennungen der Integritätseinschränkungsregel(n) sind, die für eine Satellitenüberwachungsstation, deren Betrieb eingeschränkt oder inaktiv geworden ist, zu verwenden sind, wobei die besagten Integritätseinschränkungsregeln den besagten Navigationsempfängern (R) bekannt sind.

11. Vorrichtung nach einem der Ansprüche 1 bis 10, **dadurch gekennzeichnet, dass** die besagten Verarbeitungsmittel (MT) dazu ausgelegt sind, periodisch Integritätsnachrichten zu erzeugen, wobei der Zeitabstand zwischen zwei ausgewählten Zeitpunkten der Periode der Erzeugung einer Integritätsnachricht entspricht.

12. Verwendung der Vorrichtung zur Erzeugung von Integritätsnachrichten (DG) nach einem der vorstehenden Ansprüche für die Integritätsdienste von in einer Gruppe mindestens bestehend aus GALILEO, GPS, EGNOS, WAAS und COMPASS sowie deren Varianten und äquivalenten Systemen ausgewählten Satellitennavigationssystemen.
